# EUROPEAN PATENT SPECIFICATION

(11) **EP 3 275 720 B1**
(45) Date of publication and mention of the grant of the patent: **29.01.2020**
(21) Application number: 16772074.7
(22) Date of filing: 03.03.2016
(51) Int. Cl.: B60L 3/00, B60L 9/18, B61C 3/02, B60L 53/22

(54) **AUXILIARY POWER SUPPLY DEVICE**
HILFSSTROMVERSORGUNGSVORRICHTUNG
DISPOSITIF D'ALIMENTATION ÉLECTRIQUE AUXILIAIRE

(30) Priority: 27.03.2015 JP 2015067257
(43) Date of publication of application: 31.01.2018
(73) Proprietor: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: MAKI Koji, Tokyo 105-8001 (JP); YUUKI Kazuaki, Tokyo 105-8001 (JP); MAKINO Tomoyuki, Tokyo 105-8001 (JP); TASAKA Yosuke, Tokyo 105-8001 (JP)
(74) Representative: AWA Sweden AB
(86) International application number: PCT/JP2016/056603
(87) International publication number: WO 2016/158190

(56) References cited:
- EP-A1- 2 578 436
- EP-A1- 2 810 813
- EP-A2- 2 570 295
- WO-A1-2011/036758
- WO-A1-2012/169171
- JP-A- 2000 295 718
- JP-A- 2010 213 506
- JP-A- 2014 147 245
- JP-A- 2014 150 593

## Description

### [Technical Field]

Embodiments of the present invention relate to an auxiliary power supply device.

### [Background Art]

A conventional control device including a charging/discharging control unit which controls a charging/discharging circuit (auxiliary power supply device) such that it is charged during a normal operation of an electric vehicle and controls the charging/discharging circuit such that it is discharged during an abnormal operation of the electric vehicle to supply electric power accumulated in a battery to an AC motor via the inverter is known. However, in the conventional control device, charging/discharging control is performed by software processing, and accordingly, in some cases, it may cause that a quick initiation of charging/discharging is not performed.

WO 2012/169171 A1 discloses a vehicle power-supply system provided with the following: a power-supply unit that provides a preset power-supply voltage to a power-supply line; a rechargeable battery that comprises a lithium-ion battery and has a fully-charged voltage that is higher than the aforementioned power-supply voltage; a charging unit that uses the power-supply voltage outputted by the power-supply unit to charge the rechargeable battery; and a plurality of diodes connected in series. Said diodes are connected between the rechargeable battery and the abovementioned power-supply line such that the forward direction of said diodes runs from the rechargeable battery towards the power-supply line. The total forward voltage drop of the diodes is greater than or equal to the difference between the power-supply voltage and the fully-charged voltage of the rechargeable battery, but less than the difference between the lower limit of a preset target voltage range, where said voltage range indicates the voltage that should be supplied to the power-supply line, and the fully-charged voltage of the rechargeable battery.

EP 2578436 A1 discloses a control device for a railway vehicle, wherein the control device controls an inverter device 4 based on a direct-current link voltage Vfc between the opposite terminals of a filter capacitor 3. In a circuit configuration according to the present invention, a direct-current voltage applied to the inverter device 4 during regeneration is the sum of a voltage Vb of power storage equipment 6 and an overhead wire voltage Vs as described later, so that only detecting the direct-current link voltage Vfc is not enough to separate the voltage Vb of the power storage equipment 6 and the overhead wire voltage Vs from each other, and it cannot be determined whether the current state is the state of light load regeneration or not. In the circuit configuration in which the power storage equipment can be connected in series with the inverter device 4, a voltage sensor that detects the overhead wire voltage Vs is provided between a current collector device 1 and a grounding point, and the power storage equipment is controlled based on the detection result from the voltage sensor.

### [Citation List]

### [Patent Literature]

[Patent Literature 1]
Japanese Unexamined Patent Application, First Publication No. 2006-14395

### [Summary of Invention]

### [Technical Problem]

An object of the present invention is to provide an auxiliary power supply device which can initiate charging/discharging smoothly.

### [Solution to Problem]

The present invention is defined by the appended claims. An auxiliary power supply device of embodiments includes an electricity storage, a diode, a current sensor, and a controller. The electricity storage is configured to store electric power supplied from a power source supplying the electric power to a load, the electricity storage being connected in parallel to the power source with respect to the load. The diode is configured to allow a current in one direction, the diode being placed in series with the electricity storage. The current sensor is configured to detect the current flowing through the diode. The controller is configured to perform a predetermined control when the current is detected by the current sensor.

### [Brief Description of Drawings]

Fig. 1 is a diagram illustrating a configuration of an electric vehicle 2 including an auxiliary power supply device of a first embodiment.
Fig. 2 is a diagram illustrating changes in a voltage and a discharge current Ib, and an example of operations of a circuit breaker 6 and a first switching unit 32 of the first embodiment.
Fig. 3 is a schematic diagram of an electric vehicle 2A of a second embodiment.
Fig. 4 is a schematic diagram of an electric vehicle 2B of a third embodiment.
Fig. 5 is a schematic diagram of an electric vehicle 2C of a fourth embodiment.
Fig. 6 is a diagram illustrating changes in a voltage and a regenerative current Ib#, and an example of an on/off state of a regeneration control signal.

### [Description of Embodiments]

An auxiliary power supply device of embodiments will be described below with reference to the drawings. In the following embodiments, the auxiliary power supply device is used for electric vehicles.

### (First embodiment)

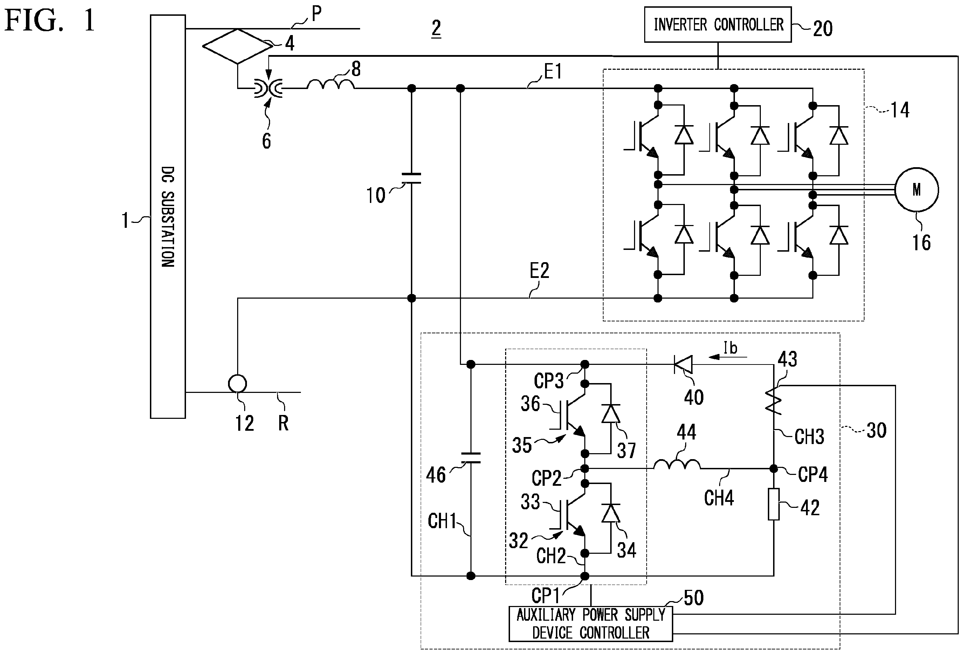

Fig. 1 is a diagram illustrating a configuration of an electric vehicle 2 including an auxiliary power supply device of a first embodiment. The electric vehicle 2 includes a pantograph 4, a circuit breaker 6, a filter reactor 8, a smoothing capacitor 10, wheels 12, an inverter 14, a motor 16, an inverter controller 20, and an auxiliary power supply device 30. The electric vehicle 2 has a first supply line E1 and a second supply line E2 (ground side). The pantograph 4, the circuit breaker 6, the filter reactor 8 and the inverter 14 are connected to the first supply line E1. The wheels 12 and the inverter 14 are connected to the second supply line E2.

The pantograph 4 provides direct current (DC) power supplied from a DC substation 1 (power source) to an overhead wire P to the electric vehicle 2. The circuit breaker 6 cuts off supply of DC power to the filter reactor 8 under predetermined conditions. The filter reactor 8 suppresses high-frequency components contained in electric power supplied through the circuit breaker 6.

Electric power, from which the high-frequency components are suppressed by the filter reactor 8, is applied to one terminal of the smoothing capacitor 10. The wheels 12 of the electric vehicle 2 are connected to the other terminal of the smoothing capacitor 10. The wheels 12 are on a line R and therefore function as a ground. The smoothing capacitor 10 smoothes DC voltage ripples applied to both terminals thereof, and thereafter the smooth capacitor 10 applies the smoothed voltage of the DC power to the inverter 14.

The inverter 14 converts the DC voltage supplied through the smoothing capacitor 10 into a 3-phase AC voltage at a desired frequency on the basis of a control signal (e.g., a pulse width modulation (PWM) signal) input from the inverter controller 20 and provides the converted 3-phase AC voltage to the motor 16. A rotor of the motor 16 is rotated based on the 3-phase AC voltage, and generates a driving force.

The driving force output from the motor 16 is applied to the wheels 12 through a connecting mechanism such as a gear, not shown, to drive the electric vehicle 2. For example, the motor 16 may be a cage type 3-phase induction motor. When the motor 16 performs regenerative operation, AC regenerative electric power generated by the motor 16 is converted into a DC regenerative electric power through the inverter 14. The regenerative electric power converted into DC is supplied to the smoothing capacitor 10 of the inverter 14.

The inverter controller 20 generates a PWM control signal, for example, on the basis of a signal (the number of notches or the like) input from a master controller (not shown) and outputs the generated PWM control signal to the inverter 14.

The auxiliary power supply device 30 is connected in parallel to the power source such as a DC substation and a capacitor with respect to the load such as the inverter 14. That is, the two terminals of the auxiliary power supply device 30 are respectively connected to a desired point on the first supply line E1 and a desired point on the second supply line E2.

The auxiliary power supply device 30 includes a first switching unit 32, a second switching unit 35, a diode 40, an electricity storage 42, a current sensor 43, a reactor 44, a smoothing capacitor 46, and an auxiliary power supply device controller 50. The auxiliary power supply device 30 is a circuit in which a first path CH1, a second path CH2 and a third path CH3 are installed in parallel each other.

The smoothing capacitor 46 is placed on the first path CH1. The first switching unit 32 and the second switching unit 35 are placed on the second path CH2. The first switching unit 32 is a circuit including a switching element 33 and a diode 34 connected in parallel to the switching element 33. The switching element 33 allows a current to flow toward a connecting point CP1 in an ON state and also allows a current to flow toward a connecting point CP2 in an OFF state through the bypassing diode 34. Also, the second switching unit 35 is a circuit including a switching element 36 and a diode 37 connected in parallel to the switching element 35. The switching element 36 allows a current to flow toward the connecting point CP2 in an ON state and also allows a current to flow toward a connecting point CP3 in an OFF state through the bypassing diode 37.

A path CH4 is formed between a point (connecting point CP2) on the second path CH2 and a connecting point CP4 on the third path CH3. The connecting point CP2 is set between the first switching unit 32 and the second switching unit 35 on the second path CH2. On the other hand, the connecting point CP4 is set a given point on the third path CH3. Also, the reactor 44 is placed on the path CH4. The potential of the connecting point CP3 is increased to higher potential than the potential of the connecting point CP4 by turning on/off the switching element 33.

One end of the third path CH3 on the side of the connecting point CP1 is connected to the second supply line E2 and the other end of the third path at the side of the connecting point CP3 is connected to the first supply line E1. The diode 40 and the current sensor 43 are placed in series between the connecting point CP3 and the connecting point CP4 on the third path CH3. The diode 40 allows a discharge current Ib to flow to the connecting point CP3 from the connecting point CP4 (electricity storage 42) and cuts a current flowing to the connecting point CP4 from the connecting point CP3. The electricity storage 42 is placed between the connecting point CP1 and the connecting point CP4. The electricity storage 42 is an electrical capacitor which can store electricity, such as a battery and a capacitor.

The current sensor 43 is placed, for example, between the diode 40 and the connecting point CP4. For example, the current sensor 43 detects a magnetic flux intensity caused by a current using a Hall IC. The current sensor 43 detects a current equal to or greater than a predetermined value.

A processor such as a central processing unit (CPU) can be the auxiliary power supply device controller 50. For example, the auxiliary power supply device controller 50 monitors the operating state of the electric vehicle 2 on the basis of detected data by various sensors included in the electric vehicle 2, which detect the operating state of the electric vehicle 2. When the electric vehicle 2 operates normally, the auxiliary power supply device controller 50 controls the switching element 33 to be turned off and controls the switching element 36 to be turned on. Accordingly, part of the DC power supplied through the pantograph 4 is stored in the electricity storage 42 via the switching element 36 and the reactor 44.

The auxiliary power supply device controller 50 receives the detection result of the current sensor 43. The auxiliary power supply device controller 50 outputs a cutoff signal to the circuit breaker 6 on the basis of the detection result of the current sensor 43. When the cutoff signal is not received, the circuit breaker 6 is in a state in which the electric power supplied from the pantograph 4 has been provided to the filter reactor 8. On the other hand, when the cutoff signal output from the current sensor 43 is received, the circuit breaker 6 cutoff the electric power supplied from the pantograph 4 to the filter reactor 8.

When the electric vehicle 2 normally operates, electric power is supplied from the pantograph 4 to the inverter 14 and thus a potential difference, that is, a voltage between the first supply line E1 and the second supply line E2 becomes higher than the voltage of the electricity storage 42. However, when the electric vehicle 2 does not normally operate, the voltage between the first supply line E1 and the second supply line E2 may become lower than the voltage across the electricity storage 42.

When the electric vehicle 2 does not normally operate, it is assumed that electric power is not normally supplied to the electric vehicle 2 from the pantograph 4 due to, for example, power failure in the DC substation 1, abnormality of the overhead wire P, abnormality of the pantograph 4, rupture of the line R and the like. When such situation that the electric vehicle 2 does not normally operates occurs, the discharge current Ib based on the current stored in the electricity storage 42 is supplied to the inverter 14 through the diode 40. Accordingly, the voltage between the first supply line E1 and the second supply line E2 promptly coincides with the voltage of the electricity storage 42. In addition, the circuit breaker 6 receives the cutoff signal and cuts off electrical conduction between the pantograph 4 and the filter reactor 8.

Further, when the electric vehicle 2 does not normally operates, the auxiliary power supply device controller 50 controls the switching element 33 such that it is repeatedly turned on and off in a specific period. Accordingly, the DC power stored in the electricity storage 42 is boosted through the reactor 44 and the diode 37 and discharged to the inverter 14. Consequently, the input voltage to the inverter 14 is increased up to a voltage equal to or higher than the voltage of the electricity storage 42.

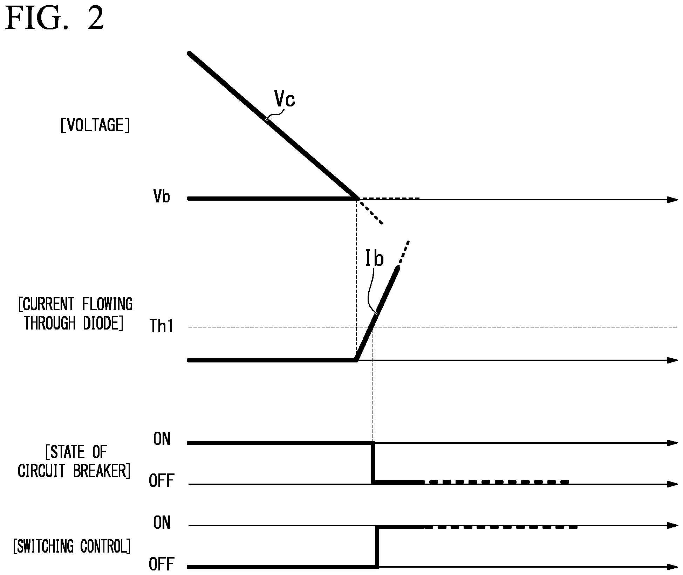

Fig. 2 is a diagram illustrating changes in a voltage and a discharge current Ib, and an example of operations of the circuit breaker 6 and the first switching unit 32 regarding the first embodiment. In the figure, a voltage Vc indicates an input voltage value of the inverter 14 and a voltage Vb indicates a voltage value of the electricity storage 42. In addition, the discharge current Ib is a current value flowing through the diode 40, that is, a current value detected by the current sensor 43. When the voltage Vb increases to be higher than the voltage Vc, the diode 40 allows the discharge current Ib to be supplied from the electricity storage unit 24. The current sensor 43 monitors a change of the discharge current lb. When the discharge current Ib reaches a threshold value Th1 or higher, the auxiliary power supply device controller 50 outputs a cutoff signal to the circuit breaker 6. The circuit breaker 6 switches from a conductive state (ON in the figure) to a shut-off state (OFF in the figure) When the circuit breaker 6 acquires the cutoff signal.

Another device, not shown, may be connected between the circuit breaker 6 and the pantograph 4. In this case, when the circuit breaker 6 is not switched to the cutoff state, electric power supplied from the electricity storage 42 is provided to the other device and thus sufficient electrical power may not be supplied to the inverter 14. In the present embodiment, since the circuit breaker 6 is set to the cutoff state, almost all of the electric power from the electricity storage 42 is supplied to the inverter 14. Consequently, the discharge current Ib can be promptly supplied from the electricity storage 42 to the inverter 14 so as to satisfy the input voltage to the inverter 14 at a predetermined value or higher even when the input voltage of the inverter 14 decreases to be equal to or lower than a predetermined value.

Meanwhile, as shown in figures, when the auxiliary power supply device controller 50 receives a signal indicating that the discharge current Ib has reached the threshold value Th1 or higher from the current sensor 43, the auxiliary power supply device controller 50 may control the switching element 33 such that it is turned on to boost the voltage of electric power stored in the electricity storage 42 and supply the boosted voltage to the inverter 14.

Further, in the electric vehicle 2 of the first embodiment, a circuit breaker controller (not shown) can be placed between the circuit breaker 6 and the current sensor 43 and output the cutoff signal to the circuit breaker 6 on the basis of the detection result of the current sensor 43. In addition, a shunt resistor may be placed between the diode 40 and the electricity storage 42 and the circuit breaker controller may detect a change of the voltage across the shunt resistor and output the cutoff signal on the basis of the detection result.

In the first embodiment, the position at which the current sensor 43 is placed is not limited to a position between the diode 40 and the electricity storage 42 and can be placed between the first supply line E1 and the diode 40. Furthermore, the current sensor 43 can be placed at arbitrary position if the current sensor is able to detect a change of the discharge current Ib flowing through the diode 40.

Further, the current sensor 43 and the circuit breaker 6 may be connected to each other through a relay circuit. In this case, when the current sensor 43 detects a current value equal to or greater than a predetermined value, the circuit breaker 6 connected through the relay circuit operates in the cut-off state through the relay circuit.

According to the above-described auxiliary power supply device 30 of the first embodiment, the diode 40 which allows a current to flow to the inverter 14 from the electricity storage 42 is placed on the third path CH3 and electric power stored in the electricity storage 42 is supplied to the inverter 14 when the voltage applied to the diode 40 by the power source becomes lower than the voltage applied to the diode 40 by the electricity storage 42, and thus discharge can be initiated more rapidly. In addition, the auxiliary power supply device controller 50 cuts electrical connection between the pantograph 4 and the inverter 14, and the auxiliary power supply device 30 by causing the circuit breaker 6 to switch to the cut-off state on the basis of the detection result of the current sensor 43, and thus almost all of electric power discharged from the electricity storage 42 can be supplied to the inverter 14. Further, the auxiliary power supply device controller 50 controls the switching element 33 such that it is turned on to boost the voltage of electric power stored in the electricity storage 42 and supply the boosted voltage to the inverter 14, and thus the input voltage of the inverter 14 can be maintained at a high level.

### (Second embodiment)

Next, a second embodiment will be described. An electric vehicle 2A including an auxiliary power supply device 30A of the second embodiment differs from the electric vehicle 2 including an auxiliary power supply device 30 of the first embodiment in that the electric vehicle 2A is supplied with AC power from an AC substation 1A via the overhead wire P and a converter 62 converts the provided AC power into DC power and supplies the DC power to the inverter 14. A description will be given on the basis of such differences.

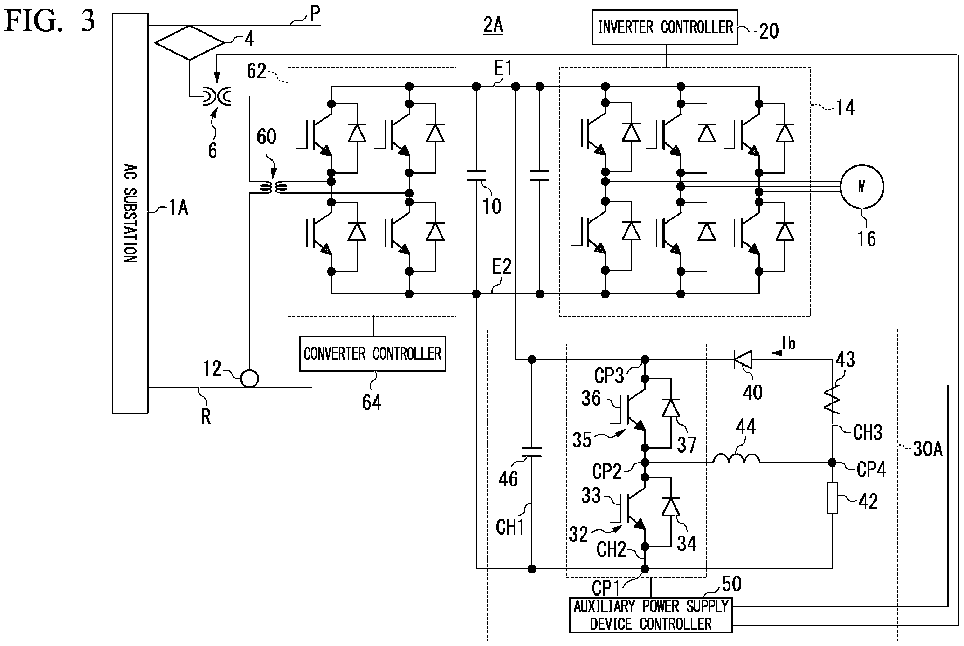

Fig. 3 is a diagram illustrating a configuration of the electric vehicle 2A of the second embodiment. The electric vehicle 2A of the second embodiment includes a transformer 60, a converter 62, and a converter controller 64. The transformer 60 is placed between the circuit breaker 6 and the wheels 12, and the converter 62. The transformer 60 transforms the voltage of AC power supplied by the pantograph 4 into a voltage suitable for use in the electric vehicle 2A. The converter 62 is placed between the transformer 60 and the smoothing capacitor 10. The converter 62 converts the AC power supplied from the transformer 60 into DC power and provides the DC power to the inverter 14. The converter controller 64 controls the converter 62 to convert the AC power supplied from the transformer 60 into desired DC power.

The above-described auxiliary power supply device 30A of the second embodiment can obtain the same effects as those of the first embodiment, and when AC power is supplied from the AC substation 1A via the overhead wire P, the converter 62 can convert the AC power into DC power and supply the DC power to the inverter 14 or the electricity storage 42.

### (Third embodiment)

Next, a third embodiment will be described. An electric vehicle 2B including an auxiliary power supply device 30B of the third embodiment differs from the electric vehicle 2 including an auxiliary power supply device 30 of the first embodiment in that a reactor 45 having a lower reactance value than that of the reactor 44 is placed between the diode 40 and the current sensor 43. A description will be given on the basis of such differences.

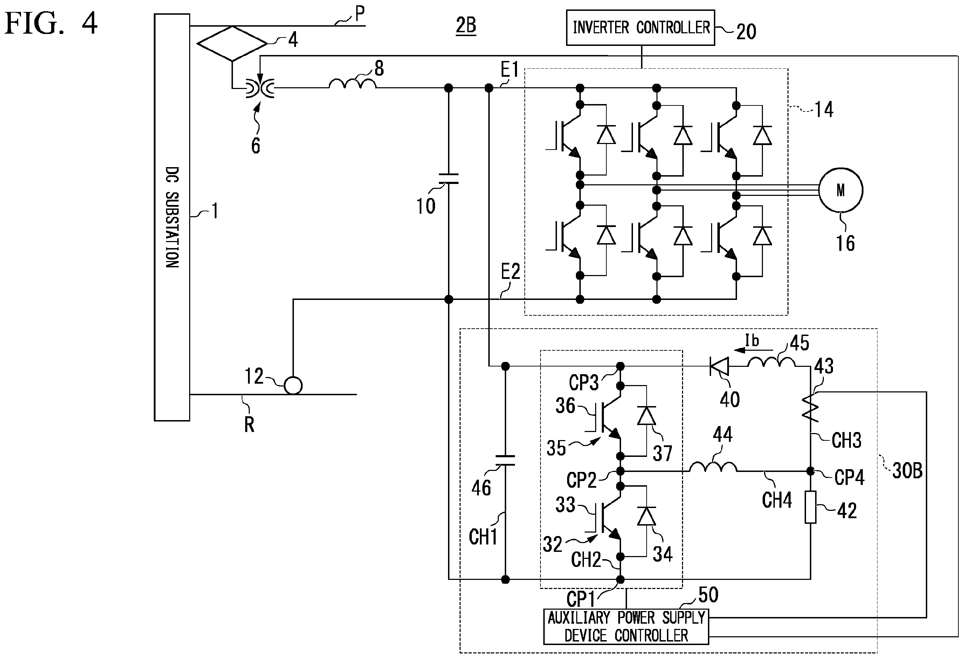

Fig. 4 is a diagram illustrating a configuration of the electric vehicle 2B of the third embodiment. The reactor 45 is placed between the diode 40 and the current sensor 43. The reactor 45 has a lower value L than that of the reactor 44. For example, when the input voltage Vc of the inverter 14 is lower than the voltage Vb of the electricity storage 42 and the diode 40 allows the current to be supplied from the electricity storage 42 to the inverter 14, the discharge current Ib abruptly increases and flows in some cases. Since, in the present embodiment, the reactor 45 is utilized, abrupt increase in the discharge current Ib can be suppressed. In addition, since the reactance value of the reactor 45 is less than the reactance value of the reactor 44, the discharge current Ib does not flow to the reactor 44.

According to the above-described auxiliary power supply device 30B of the third embodiment, it is possible to obtain the same effects as those of the first embodiment and to suppress abrupt increase of the discharge current Ib which is allowed to flow to the inverter 14 from the electricity storage 42 by the diode 40 because the reactor 45 is utilized, and thus electric power suitable for being used by the inverter 14 can be supplied.

### (Fourth embodiment)

Next, a fourth embodiment will be described. An electric vehicle 2C including an auxiliary power supply device 30C of the fourth embodiment differs from the electric vehicle 2 including an auxiliary power supply device 30 of the first embodiment in that a peak voltage of the DC voltage at the inverter 14 is set not to exceed the voltage of the electricity storage 42. A description will be given on the basis of such differences.

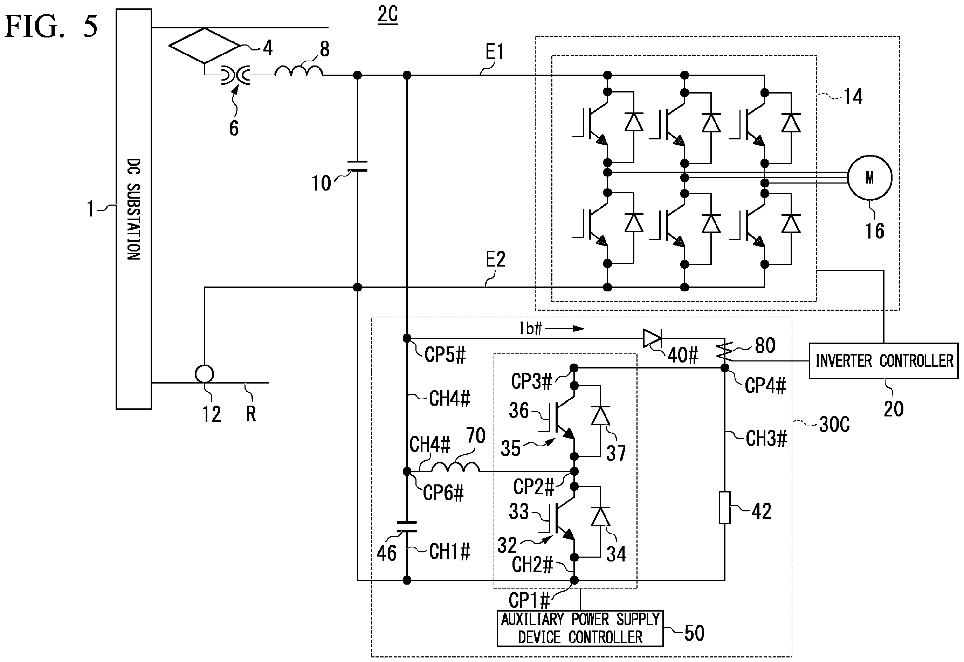

Fig. 5 is a diagram illustrating a configuration of the electric vehicle 2C of the fourth embodiment. The inverter controller 20 controls switching elements of the inverter 14 so that a mechanical brake generates part of a braking force, in response to reception of a regeneration control signal. That is, the inverter controller 20 weakens regenerative braking. Accordingly, regenerative electric power supplied from the inverter 14 to the auxiliary power supply device 30C and the pantograph 4 is reduced.

The auxiliary power supply device 30C is connected in parallel to the power source and a capacitor with respect to a load. That is, two terminals of the auxiliary power supply device 30C are respectively connected to an arbitrary point on the first supply line E1 and an arbitrary point on the second supply line E2.

The auxiliary power supply device 30C is connected between both terminals of the smoothing capacitor 10. The auxiliary power supply device 30C includes the first switching unit 32, the second switching unit 35, a diode 40#, the electricity storage unit 42, a current sensor 80, a reactor 70, a smoothing capacitor 46, and the auxiliary power supply device control unit 50. In addition, the auxiliary power supply device 30C is a circuit in which a first path CH1#, a second path CH#2, and a third path CH3# are placed in parallel.

The smoothing capacitor 46 is placed on the first path CH1#. The first switching unit 32 and the second switching unit 35 are placed on the second path CH2#. The first switching unit 32 is a circuit in which the switching element 33 and the diode 34 are connected in parallel with each other. The switching element 33 allows a current to flow from a connecting point CP2# in an ON state and also allows a current to flow to the connecting point CP2# in an OFF state through the bypassing diode 34. Similarly, the second switching unit 35 is a circuit in which the switching element 36 and the diode 37 are connected in parallel with each other. The switching element 35 allows a current to flow from a connecting point CP3# in an ON state and also allows a current to flow to the connecting point CP3# in an OFF state through the bypassing diode 37. In addition, the connecting point CP3# and the third path CH3# are connected through an electrical line.

A fourth path CH4# is formed between a point (connecting point CP2#) on the second path CH2# and a connecting point CP6# on the first path CH1#. The connecting point CP2# is set between the first switching unit 32 and the second switching unit 35 on the second path CH2#. Also, the reactor 70 is placed on the fourth path CH4#. It is possible to increase the potential of the connecting point CP3# in the figure to higher than the potential of the connecting point CP6# in the figure by turning on and off the switching element 33. In addition, the fourth path CH4# is connected to the first supply line E1.

The connecting point CP1# of the third path CH3# is connected to the second supply line E2 and a connecting point CP5# of the third path is connected to the fourth path CH4#. The diode 40# and the current sensor 80 are placed between the connecting point CP5# and the connecting point CP4# on the third path CH3#. The diode 40# allows a current to flow to the connecting point CP4# (electricity storage 42) from the connecting point CP5# and cuts a current flowing to the connecting point CP5# from the connecting point CP4#.

The current sensor 80 is placed, for example, between the diode 40# and the connecting point CP4#. The current sensor 80 detects a magnetic flux intensity caused by a current using a Hall IC. When the current sensor 80 detects a regenerative current Ib# equal to or greater than a predetermined value, the current sensor 80 outputs a regeneration control signal to the inverter controller 20. The electricity storage 42 is placed between the connecting point CP4# and the connecting point CP1#.

The auxiliary power supply device controller 50 controls the switching element 33 such that it is repeatedly turned on and off in a specific period. Accordingly, some of the DC power supplied through the pantograph 4 is boosted by the reactor 70 and stored in the electricity storage 42 through the diode 37. In addition, the auxiliary power supply device controller 50 controls the switching element 36 such that it is turned on and controls the switching element 33 such that it is turned off. Accordingly, the voltage of the electric power supplied from the electricity storage 42 is provided to the inverter 14 through the switching element 36.

During regenerative operation of the motor 16, a peak voltage of the DC voltage at the inverter 14 is compensated for with the voltage of the electricity storage 42. That is, the peak voltage of the DC voltage at the inverter 14 does not exceed the voltage of the electricity storage 42. There is a case in which regenerative electric power converted into DC power reaches a predetermined value or higher during regenerative operation of the motor 16. In this case, a load is applied to the pantograph 4 and thus an abnormality may be caused in a device connected to the pantograph 4. However, in the present embodiment, with respect to the regenerative electric power equal to or greater than the predetermined value, the diode 40# allows the regenerative current Ib# to flow from the inverter 14 to the electricity storage 42 and thus the electricity storage 42 receives the regenerative current Ib# from the inverter 14. Accordingly, the peak voltage of the DC voltage at the inverter 14 is rapidly received to the voltage of the electricity storage 42, and thus it is possible to prevent abnormality from occurring in a device connected to the pantograph 14, for example.

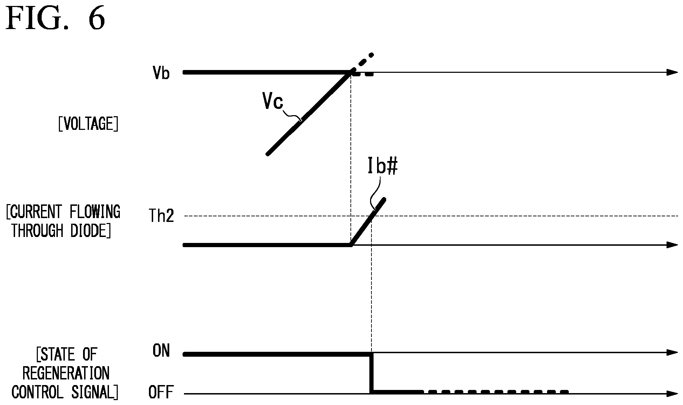

Fig. 6 is a diagram illustrating changes in the voltage and the regenerative current Ib#, and an example of on/off state of the regeneration control signal of the fourth embodiment. In the figure, a voltage Vc indicates a voltage value of the inverter 14 and a voltage Vb indicates a voltage value of the electricity storage 42. In addition, the regenerative current Ib# is a current value flowing through the diode 40#. That is, the regenerative current Ib# is a current value detected by the current sensor 80. When the voltage Vc reaches the voltage Vb or higher, the current of the regenerative electric power supplied from the inverter 14 is provided to the electricity storage 42 through the diode 40#. When the regenerative current Ib# reaches a threshold value Th2 or higher, the inverter controller 20 outputs the regeneration control signal on the basis of the detection result of the regenerative current Ib# obtained by the current sensor 80 and controls the inverter 14 to be turned off such that the regenerative electric power supplied to the electricity storage 42 is reduced. Consequently, the peak voltage of the DC voltage at the inverter 14 is rapidly stored in the electricity storage 42 and the inverter 14 controls the regenerative electric power in response to the detection result of the current sensor 80, and thus it is possible to prevent an abnormality from occurring, for example, in a device connected to the pantograph 4.

Meanwhile, the regeneration control signal may be a signal indicating a degree to which regenerative operation is reduced (a degree to which regenerative operation is lessened). In addition, the position at which the current sensor 80 is placed is not limited to a position between the diode 40# and the electricity storage 42 and may be, for example, a position between the connecting point CP5# and the diode 40# in the fourth embodiment. Furthermore, the position at which the current sensor 80 is installed may be any position at which a current value changing according to electrical conduction of the diode 40# can be detected.

According to the above-described fourth embodiment, the diode 40# which allows a current to flow from the inverter 14 to the electricity storage 42 is placed on the third path CH3#, and thus the electricity storage 42 can rapidly receive the regenerative electric power from the inverter 14 when the voltage of the inverter 14 for the diode 40# exceeds the voltage of the electricity storage 42 for the diode 40# according to the regenerative electric power supplied from the inverter 14. In addition, the inverter controller 20 controls the inverter 14 on the basis of the sensing result of the current sensor 80 to reduce electric power supplied from the inverter 14 to the electricity storage 42, and thus it is possible to suppress excessive increase in the electric power flowing from the inverter 14 to the electricity storage 42 and the like.

Meanwhile, although the auxiliary power supply device controller 50 and the inverter controller 20 are separate units in the first to fourth embodiments, the auxiliary power supply device controller 50 and the inverter controller 20 may be integrated into a single controller.

Further, although a case in which the auxiliary power supply device 30 is applied to an electric vehicle has been described in the first to fourth embodiments, the auxiliary power supply device 30 may be applied to an apparatus having another power source and load in addition to an electric vehicle.

According to at least one of the above-described embodiments, it is possible to provide an auxiliary power supply device which includes: an electricity storage (42) configured to store electric power supplied from a power source (1) supplying the electric power to a load (14), the electricity storage being connected in parallel to the power source with respect to the load, a diode (40 and 40#) configured to allow a current in one direction, the diode being placed in series with the electricity storage, a current sensor (43 and 80) configured to detect the current flowing through the diode, and a controller (20 and 50) configured to perform a predetermined control when the current is detected by the current sensor, to thereby initiate charging/discharging more rapidly.

While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An auxiliary power supply system (6, 14, 16, 30) for electric vehicle comprising:
an inverter (14) configured to convert DC power input from an overhead wire (P) into AC power,
a motor (16) configured to drives wheels of the electric vehicle using the AC power supplied by the inverter (14),
a circuit breaker (6) is configured to be placed between the DC power side of the inverter (14) and the overhead wire (P), to cut electrical conduction between the overhead wire (P) and the inverter (14) or to make electrical conduction between the overhead wire (P) and the inverter (14),
an electricity storage (42) configured to store electric power supplied from the overhead wire supplying the electric power to the inverter (14), the electricity storage (42) being connected in parallel to the overhead wire with respect to the inverter (14), the electricity storage (42) being connected through a voltage boosting circuit (32, 35) connected in parallel to the overhead wire with respect to the inverter (14), the voltage boosting circuit (32, 35) configured to boost a voltage supplied from the electricity storage (42) and provide the boosted voltage to the inverter (14), ;
a diode (40) configured to allow a current to flow in one direction,;
a current sensor (43) configured to detect the current flowing through the diode (40); and
a controller configured to perform a predetermined control when the current is detected by the current sensor (43),
**characterized in that** the diode (40) being placed in series with the electricity storage (42) between the electricity storage and the voltage boosting circuit, the one direction being direction from the electricity storage (42) to the DC power side of the inverter (14), a first side of the diode (40) being connected to the electricity storage (42), a second side of the diode (40) being connected to between the DC power side of the inverter (14) and the circuit breaker (6),
wherein the controller, when the current is detected by the current sensor (43), is configured to cause the circuit breaker (6) to cut electrical conduction between the overhead wire (P) and the inverter (14), to cause the voltage boosting circuit (32, 35) to boost a voltage supplied from the electricity storage (42), and to provide the boosted voltage to the inverter (14) as a predetermined control.

2. The auxiliary power supply device according to claim 1,
wherein the diode (40) is configured to allow the current to flow from the electricity storage (42) to the overhead wire (P) when the voltage of the overhead wire (P) for the diode (40) becomes lower than the voltage of the electricity storage (42) for the diode (40).

## Patentansprüche

1. Hilfsstromversorgungssystem (6, 14, 16, 30) für Elektrofahrzeug, umfassend:
einen Wechselrichter (14), der zum Umformen von DC-Strom, welcher von einer Oberleitung (P) eingespeist wird, in AC-Strom konfiguriert ist,
einen Motor (16), der zum Antreiben von Rädern des Elektrofahrzeugs unter Benutzung des AC-Stroms, welcher durch den Wechselrichter (14) zugeführt wird, konfiguriert ist,
wobei ein Leistungsschalter (6) zur Anordnung zwischen der DC-Stromseite des Wechselrichters (14) und der Oberleitung (P) konfiguriert ist, um elektrische Leitfähigkeit zwischen der Oberleitung (P) und dem Wechselrichter (14) zu unterbrechen, oder um elektrische Leitfähigkeit zwischen der Oberleitung (P) und dem Wechselrichter (14) herzustellen,
einen Stromspeicher (42), der zum Speichern von elektrischem Strom konfiguriert ist, welcher von der Oberleitung zugeführt wird, die den Wechselrichter (14) mit dem elektrischen Strom versorgt, wobei der Stromspeicher (42) parallel an die Oberleitung bezüglich des Wechselrichters (14) angeschlossen ist, wobei der Stromspeicher über einen Spannungsanhebungskreis (32, 35) angeschlossen ist, der parallel an die Oberleitung bezüglich des Wechselrichters (14) angeschlossen ist, wobei der Spannungsanhebungskreis (32, 35) zum Anheben einer Spannung, die vom Stromspeicher (42) zugeführt wird, und zum Zuführen der angehobenen Spannung zum Wechselrichter (14) konfiguriert ist,
eine Diode (40), die zum Ermöglichen, dass ein Strom in eine Richtung fließt, konfiguriert ist,
einen Stromsensor (43), der zum Erkennen des Stroms, der durch die Diode (40) fließt, konfiguriert ist; und
eine Steuerung, die zum Ausführen eines vorbestimmten Steuerns konfiguriert ist, wenn der Strom durch den Stromsensor (43) erkannt wird,
**dadurch gekennzeichnet, dass** die Diode (40) in Reihe mit dem Stromspeicher (42) zwischen dem Stromspeicher und dem Spannungsanhebungskreis angeordnet ist, die eine Richtung eine Richtung vom Stromspeicher (42) zur DC-Stromseite des Wechselrichters (14) ist, eine erste Seite der Diode (40) an den Stromspeicher (42) angeschlossen ist, eine zweite Seite der Diode (40) zwischen der DC-Stromseite des Wechselrichters (14) und dem Leistungsschalter (6) angeschlossen ist,
wobei die Steuerung, wenn der Strom durch den Stromsensor (43) erkannt wird, zum Bewirken, dass der Leistungsschalter (6) die elektrische Leitfähigkeit zwischen der Oberleitung (P) und dem Wechselrichter (14) unterbricht, zum Bewirken, dass der Spannungsanhebungskreis (32, 35) eine Spannung, die vom Stromspeicher (42) zugeführt wird, anhebt, und zum Zuführen der angehobenen Spannung zum Wechselrichter (14) als ein vorbestimmtes Steuern konfiguriert ist.

2. Hilfsstromversorgungsvorrichtung nach Anspruch 1,
wobei die Diode (40) zum Ermöglichen, dass der Strom vom Stromspeicher (42) zur Oberleitung (P) fließt, konfiguriert ist, wenn die Spannung der Oberleitung (P) für die Diode (40) niedriger als die Spannung des Stromspeichers (42) für die Diode (40) wird.

## Revendications

1. Système d'alimentation électrique auxiliaire (6, 14, 16, 30) pour un véhicule électrique, comprenant :
un onduleur (14) configuré pour convertir un courant continu alimenté par un câble aérien (P) en courant alternatif,
un moteur (16) configuré pour entraîner des roues du véhicule électrique à l'aide du courant alternatif fourni par l'onduleur (14),
un disjoncteur (6) configuré pour être placé entre le côté courant continu de l'onduleur (14) et le câble aérien (P), pour couper la conduction électrique entre le câble aérien (P) et l'onduleur (14) ou pour établir une conduction électrique entre le câble aérien (P) et l'onduleur (14),
un accumulateur d'électricité (42) configuré pour stocker de l'énergie électrique provenant du câble aérien fournissant l'énergie électrique à l'onduleur (14), l'accumulateur d'électricité (42) étant relié en parallèle au câble aérien par rapport à l'onduleur (14), l'accumulateur d'électricité (42) étant relié par le biais d'un circuit d'amplification de tension (32, 35) relié en parallèle au câble aérien par rapport à l'onduleur (14), le circuit d'amplification de tension (32, 35) étant configuré pour amplifier une tension fournie par l'accumulateur d'électricité (42) et pour fournir la tension amplifiée à l'onduleur (14) ;
une diode (40) configurée pour permettre à un courant de circuler dans une direction ;
un capteur de courant (43) configuré pour détecter le courant circulant à travers la diode (40) ; et
un dispositif de commande configuré pour exécuter une commande prédéterminée lorsque le courant est détecté par le capteur de courant (43),
**caractérisé en ce que** la diode (40) est placée en série avec l'accumulateur d'électricité (42) entre l'accumulateur d'électricité et le circuit d'amplification de tension, ladite direction étant une direction allant de l'accumulateur d'électricité (42) vers le côté courant continu de l'onduleur (14), un premier côté de la diode (40) étant relié à l'accumulateur d'électricité (42), un deuxième côté de la diode (40) étant relié entre le côté courant continu de l'onduleur (14) et le disjoncteur (6),
dans lequel le dispositif de commande, lorsque le courant est détecté par le capteur de courant (43), est configuré pour amener le disjoncteur (6) à couper la conduction électrique entre le câble aérien (P) et l'onduleur (14), pour amener le circuit d'amplification de tension (32, 35) à amplifier une tension fournie par l'accumulateur d'électricité (42), et pour fournir la tension amplifiée à l'onduleur (14) en tant que commande prédéterminée.

2. Dispositif d'alimentation électrique auxiliaire selon la revendication 1,
dans lequel la diode (40) est configurée pour permettre au courant de circuler de l'accumulateur d'électricité (42) vers le câble aérien (P) lorsque la tension du câble aérien (P) pour la diode (40) devient plus faible que la tension de l'accumulateur d'électricité (42) pour la diode (40).
